# EUROPEAN PATENT APPLICATION

(11) **EP 4 626 005 A1**
(43) Date of publication of application: **01.10.2025**
(21) Application number: 23893913.6
(22) Date of filing: 22.11.2023
(51) Int. Cl.: H04N 21/647

(54) **VIDEO MULTICAST METHOD, ELECTRONIC DEVICE, AND STORAGE MEDIUM**

(30) Priority: 22.11.2022 CN 202211466184
(71) Applicant: ZTE CORPORATION, Shenzhen, Guangdong 518057 (CN)
(72) Inventor: GAO, Yuanzhong, Suzhou, Jiangsu 215000 (CN); JIANG, Ping, Suzhou, Jiangsu 215000 (CN); ZHU, Xingchang, Suzhou, Jiangsu 215000 (CN)
(74) Representative: Deambrogi, Edgardo
(86) International application number: PCT/CN2023/133384
(87) International publication number: WO 2024/109825

(57) **Abstract**

Provided are a video multicast method, an electronic device, and a storage medium, which belong to the field of multicast technologies. The method includes: acquiring a multicast stream from a server end; acquiring a corresponding position range of each media data packet in a multicast stream in original media data; determining a plurality of first compensation position ranges of a multicast stream according to a corresponding position range of each media data packet in original media data; in the case where the total number of the plurality of first compensation position ranges in the multicast stream is greater than a threshold value of unicast compensation times, performing merging processing on the plurality of first compensation position ranges in the multicast stream to obtain a plurality of second compensation position ranges in the multicast stream; performing unicast compensation on the multicast stream according to a plurality of second compensation position ranges; the compensated multicast stream is sent to the player end.

## Description

### Cross-Reference to Related Application

This disclosure is based on Chinese Patent Application CN 202211466184.1 filed on November 22, 2022 and entitled "Video multicast method, electronic device, and storage medium", and claims priority to this patent application, the disclosure of which is incorporated herein by reference in its entirety.

### Technical Field

The present disclosure relates to the field of multicast technologies, and in particular, to a video multicast method, an electronic device, and a storage medium.

### Background

At present, watching a video online through a video terminal such as a set top box, a mobile phone, a tablet computer, or a personal computer has become an increasingly common entertainment method for leisure. An Internet video (Over The Top, OTT) service is mostly transmitted based on a streaming media network transmission protocol of a Hyper Text Transfer Protocol (HTTP).

In some situations, to save servers and network resources, OTT streaming begins to be transmitted in a multicast format. During the transmission in the multicast mode, video multicast data may be missing, and with the increase of the missing part of the video multicast data, the number of times of compensating the video multicast data tends to increase, and the efficiency of compensating the video multicast data is reduced, thereby causing poor video multicast quality.

### Summary

Provided are a video multicast method, an electronic device and a storage medium, aiming to solve the problem of improving the video multicast quality.

According to a first aspect, an embodiment of the present disclosure provides a video multicast method, including:
acquiring a multicast stream from a server end; acquiring a corresponding position range of each media data packet in a multicast stream in original media data; determining a plurality of first compensation position ranges of a multicast stream according to a corresponding position range of each media data packet in original media data; determining a total number of a plurality of first compensation position ranges in a multicast stream; in the case where the total number of the plurality of first compensation position ranges in the multicast stream is greater than a threshold value of unicast compensation times , according to a pre-set merging rule, merging the plurality of first compensation position ranges in the multicast stream to obtain a plurality of second compensation position ranges in the multicast stream; performing unicast compensation on the multicast stream according to a plurality of second compensation position ranges; the multicast stream after the unicast compensation is sent to the player end.

According to a second aspect, an embodiment of the present disclosure further provides an electronic device. The electronic device includes a processor, a memory, a computer program stored in the memory and executable by the processor, and a data bus for implementing connection and communication between the processor and the memory. When the computer program is executed by the processor, the steps of the video multicast method according to any one of the embodiments of the present disclosure are implemented.

According to a third aspect, an embodiment of the present disclosure further provides a storage medium, configured for computer readable storage. The storage medium stores one or more programs. The one or more programs may be executed by one or more processors, so as to implement steps of any video multicast method provided in the description of the present disclosure.

### Brief Description of the Drawings

To describe the technical solutions in the embodiments of the present disclosure more clearly, the following briefly introduces the accompanying drawings required for describing the embodiments. Apparently, the accompanying drawings in the following description show merely some embodiments of the present disclosure, and a person of ordinary skill in the art may still derive other drawings from these accompanying drawings without creative efforts.
Figure 1 is a schematic flowchart of a video multicast method according to an embodiment of the present disclosure;
Figure 2 is a schematic diagram of a compensation range according to an embodiment of the present disclosure;
Figure 3 is a schematic diagram of FEC compensation according to an embodiment of the present disclosure;
Figure 4 is a schematic flowchart of video multicasting involved in an embodiment of the present disclosure;
Figure 5 is a schematic structural block diagram of an electronic device according to an embodiment of the present disclosure.

### Detailed Description of the Embodiments

The following clearly and completely describes the technical solutions in the examples of the present disclosure with reference to the accompanying drawings in the embodiments of the present disclosure. Apparently, the embodiments to be described are merely a part rather than all of the embodiments of the present disclosure. All other examples obtained by a person of ordinary skill in the art based on the examples of the present disclosure without creative efforts shall belong to the scope of protection of the present disclosure.

The flow charts shown in the figures are merely illustrative, do not necessarily include all of the content and operations/steps, nor do they necessarily have to be performed in the order described. For example, some operations/steps may be broken down, combined, or partially combined, and thus the order of actual execution may vary as desired.

It should be understood that the terminology used in this disclosure is for the purpose of describing particular embodiments only and is not intended to be limiting of the disclosure. As used in this description and the appended claims, the singular forms "a", "an", and "the" are intended to include the plural forms as well, unless the context clearly indicates otherwise.

Examples of the present disclosure provide a video multicast method, an electronic device, and a storage medium. The video multicast method may be applied to an electronic device, and the electronic device may be a device such as a mobile phone, a tablet computer, a notebook computer, a desktop computer, a personal digital assistant, or a wearable device. The present disclosure can also be applied to a server end. The server end can be a separate server end, and can also be a cloud server end providing basic cloud computing services such as cloud services, cloud databases, cloud computing, cloud functions, cloud storage, network services, cloud communications, middleware services, domain name services, security services, content delivery networks (CDNs), and big data and artificial intelligence platforms.

Some examples of the present disclosure will be described in detail below with reference to the accompanying drawings. Without conflict, the following embodiments and features in the embodiments may be combined with each other.

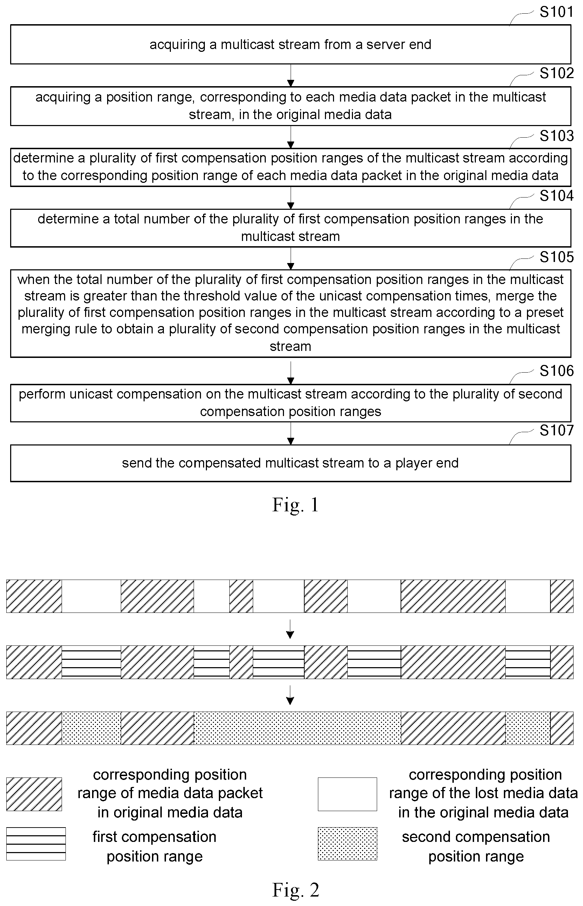

Please refer to figure 1, figure 1 is a schematic flowchart of a video multicast method according to an embodiment of the present disclosure.

As shown in figure 1, the video multicast method includes step S101 to step S107.

Exemplarily, the video multicast method is, for example, applied to a multicast system. In some examples, the multicast system includes, for example, a server end, a multicast proxy, and a player end.

In some examples, when receiving a video multicast request, a server end determines original media data corresponding to the video multicast request based on the video multicast request; according to a pre-set media data processing rule, processing original media data to generate a multicast stream; and sending the generated multicast stream to the multicast proxy.

In an example, processing original media data according to a preset media data processing rule to generate a multicast stream comprises: performing packet dividing processing on the original media data to obtain a media data packet; obtain a multicast stream according to the media data packet.

Exemplarily, the performing packet dividing processing on original media data to obtain a media data packet, for example, includes: dividing the original media data according to a preset position range threshold to obtain a media data packet.

For example, original media data, for example, includes media data of a first byte to a first 200 bytes, and a preset position range threshold, for example, is 200 bytes; then, one media data packet is determined in sequence according to media data of every 200 bytes in the original media data, for example, a media data packet 1 is obtained according to media data of the first byte to the second 200 bytes in the original media data; media data packet 2 is obtained according to the media data of the 201st byte to the 400th byte in the original media data, and so on, and media data packet 3 to media data packet 6 are determined; of course, the present disclosure is not limited thereto.

In an example, identification information may be added to the media data packets in the multicast stream.

For example, the identifier information of the media data packet includes, for example, a sequence number of the media data packet, a media data packet type identifier, and a corresponding position range of the media data packet in the original media data. For example, the serial number of the media data packet 1 is 1, the media data packet type identifier is used to indicate that the media data packet 1 is a media data packet, the corresponding position range of the media data packet 1 in the original media data is from the first byte to the 200th byte, and so on.

In some examples, the generated multicast stream is sent to the multicast proxy by sending each media data packet in the multicast stream to the multicast proxy.

Exemplarily, media data packets in a multicast stream may be grouped to obtain a multicast data packet, and by sending each multicast data packet in the multicast stream to a multicast proxy, the generated multicast stream is sent to the multicast proxy. For example, multicast data packet 1 comprises media data packet 1 to media data packet 4; the multicast data packet 2 includes, for example, a media data packet 5 to a media data packet 6; of course, the present disclosure is not limited thereto.

Step S101: acquire a multicast stream from a server end.

Exemplarily, the acquired multicast stream, for example, includes a media data packet; the acquired multicast stream, for example, further includes a multicast data packet, so as to receive a media data packet through the acquired multicast data packet.

In an example, based on the multicast stream obtained from the server end, it may be determined whether multicast data is lost in the multicast stream, so as to compensate the lost multicast data subsequently.

Step S102: obtain a corresponding position range of each media data packet in a multicast stream in original media data.

Exemplarily, identification information of each media data packet is acquired; determine, according to the identifier information of each media data packet, a corresponding position range of each media data packet in the original media data.

For example, if the identifier information of the media data packet, for example, indicates that the sequence number of the media data packet is 1, that is, the media data packet 1, it may be determined that the corresponding position range of the media data packet 1 in the original media data is, for example, from the first byte to the 200th byte; the identifier information of the media data packet, for example, indicates that the sequence number of the media data packet is 3, that is, the media data packet 3, and then it may be determined that the corresponding position range of the media data packet 3 in the original media data is, for example, from the 401st byte to the 600th byte; similarly, a corresponding position range of each media data packet in the multicast stream in the original media data may be determined.

In an example, by acquiring the corresponding position range of each media data packet in the multicast stream in the original media data, the position range of each media data packet in the multicast stream can be compared with the position range of the original media data to determine the position range of the lost multicast data of the multicast stream in the transmission process, so as to compensate the lost multicast data subsequently, thereby improving the video multicast quality.

Step S103: determine a plurality of first compensation position ranges of the multicast stream according to the corresponding position range of each media data packet in the original media data.

In some examples, a position range of original media data may be acquired, and a plurality of first compensation position ranges of a multicast stream may be determined by comparing a corresponding position range of each media data packet, indicated by identification information about each media data packet, in the original media data with a position range of the original media data.

For example, the location of the original media data ranges from the 1st byte to the 1200th byte, for example. The acquired identification information of each media data packet, for example, indicates that a sequence number of each media data packet includes a sequence number 2, a sequence number 4, and a sequence number 5, and the identification information about the media data packet indicates that the corresponding position range of the media data packet 2 in the original media data is from the 21st byte to the 400th byte, a corresponding position range of the media data packet 4 in the original media data is from the 61st byte to the 800th byte, a corresponding position range of the media data packet 5 in the original media data is from 801st byte to 1000th byte, in this case, the position range of the original media data and the position range of each media data packet in the original media data are compared, it may be determined that the first compensation position range of the multicast stream includes media data of a 1st byte to a 200th byte in the original media data, media data of 401st byte to 600th byte in the original media data and media data of 1001st byte to 1200th byte in the original media data; Of course, the present disclosure is not limited thereto.

In some embodiments, as shown in figure 2, according to a corresponding position range of each media data packet in original media data, fitting a position range of original media data, and according to media data packets which are adjacent in position, a discontinuous part existing between corresponding position ranges in the original media data, determining a corresponding position range of the lost media data in the original media data, so as to determine a plurality of first compensation position ranges of the multicast stream.

Exemplarily, referring to figure 2, a position difference value between two adjacent media data packets is acquired according to a corresponding position range of each media data packet in original media data; determining whether a position difference value between two adjacent media data packets is greater than a pre-set difference threshold; in the case where a position difference value between two adjacent location media data packets is greater than a pre-set difference threshold, according to all the position difference values, determining a plurality of first compensation position ranges of a multicast stream.

In an implementation, determining a plurality of first compensation position ranges of the multicast stream according to all the position differences, for example, comprises determining a plurality of first compensation position ranges of the multicast stream by determining position ranges corresponding to all the position differences.

For example, the acquired media data packets include media data packet 1, media data packet 3 to media data packet 6, the corresponding position range of the media data packet 1 in the original media data is, for example, from the first byte to the 200th byte, the corresponding position range of the media data packet 3 in the original media data is, for example, from the 401st byte to the 600th byte, for the media data packet 1 and the media data packet 3 located adjacently, it may be determined that the position difference between the media data packet 1 and the media data packet 3 is 200 bytes, the preset difference threshold is, for example, 1 byte, that is, it is determined that the position difference between the media data packet 1 and the media data packet 3 is greater than the preset difference threshold, and the start position of the media data packet 3 is 401st byte according to the end position of the media data packet 1 being 200th byte, determining that a corresponding position range of the position difference between the media data packet 1 and the media data packet 3 is media data between the 200th byte to the 401st byte in the original media data, that is, media data of the 201st byte to the 400th byte in the original media data, and according to the position difference, determining that a first compensation position range is media data of the 201st byte to the 400th byte in the original media data; similarly, a plurality of first compensation position ranges of the multicast stream may be determined according to all the position difference values. Certainly, the preset difference threshold is also not limited thereto. For example, the preset difference threshold may be adjusted according to the preset position range threshold, which is not limited herein.

In an example, the plurality of first compensation position ranges of the multicast stream are determined in different manners, which helps to improve the flexibility of determining the plurality of first compensation position ranges of the multicast stream; the plurality of first compensation position ranges of the multicast stream are determined by using a combination of different methods, which helps to improve the overall degree of determining the plurality of first compensation position ranges of the multicast stream. Exemplarily, by determining the flexibility degree and the overall degree of the plurality of first compensation position ranges of the multicast stream, the overall degree of unicast compensation performed on the multicast stream is improved, thereby improving the overall degree of video multicast data compensation and improving video multicast quality.

Step S104: a total number of the plurality of first compensation position ranges in the multicast stream is determined.

Exemplarily, once a first compensation position range is determined, one may be added to the total number of the first compensation position ranges, so as to determine the total number of the plurality of first compensation position ranges in the multicast stream.

In some examples, in order to ensure the efficiency of compensating the video multicast data, for example, the number of times of unicast compensation is set as the efficiency of compensating the multicast stream. For example, it is determined, according to the total total number of the plurality of first compensation position ranges in the multicast stream, whether the total total number of the plurality of first compensation position ranges in the multicast stream is greater than a threshold of the number of times of unicast compensation; if it is determined that the total number of the plurality of first compensation position ranges in the multicast stream is less than or equal to the threshold of the number of times of unicast compensation, unicast compensation may be directly performed on the multicast stream according to the plurality of first compensation position ranges; if it is determined that the number of the plurality of first compensation position ranges in the multicast stream is greater than the threshold of the number of times of unicast compensation, the first compensation position range needs to be processed, so as to ensure the efficiency of video multicast data compensation.

Step S105: when the total number of the plurality of first compensation position ranges in the multicast stream is greater than the threshold value of the unicast compensation times, perform merging processing on the plurality of first compensation position ranges in the multicast stream according to a preset merging rule to obtain a plurality of second compensation position ranges in the multicast stream.

For example, in the case where the total number of the plurality of first compensation position ranges in the multicast stream is greater than the threshold of the number of times of unicast compensation, in order to ensure the efficiency of video multicast data compensation, for example, the first compensation position ranges may be combined on the basis of the acquired first compensation position ranges, and the number of times of unicast compensation is reduced by additionally increasing the amount of unicast compensation data.

Exemplarily, as shown in figure 2, according to a preset merging rule, merging a plurality of first compensation position ranges in a multicast stream to obtain a plurality of second compensation position ranges in the multicast stream comprises: acquiring a position difference value between each two adjacent first compensation position ranges; sequentially selecting first compensation position ranges adjacent to two positions with the minimum position difference value for merging processing to obtain a first compensation position range after merging processing; stopping performing merging processing on the first compensation position range in the multicast stream in the case that the total number of the remaining first compensation position ranges in the multicast stream and the number of the first compensation position ranges after the merging processing is smaller than or equal to the threshold of the number of times of unicast compensation; and acquiring a plurality of second compensation position ranges in the multicast stream according to the remaining first compensation position ranges and the first compensation position range on which merging processing is performed.

For example, the plurality of first compensation position ranges in the multicast stream include, for example, a first compensation position range 1 to a first compensation position range 3, the first compensation position range 1, for example, includes media data of a 1st byte to a 200th byte in the original media data, the first compensation position range 2, for example, includes media data of a 401st byte to a 600th byte in the original media data, and the first compensation position range 3, for example, comprises media data of the 1001st byte to the 1200th byte in the original media data, that is, the total number of the first compensation position ranges in the multicast stream is 3.

Exemplarily, the threshold of the number of times of unicast compensation is, for example, 2, and therefore, a plurality of first compensation position ranges in the multicast stream need to be merged according to a preset merging rule to obtain a plurality of second compensation position ranges in the multicast stream. For the adjacent first compensation position range 1 and first compensation position range 2, a position difference between the first compensation position range 1 and the first compensation position range 2 is 200 bytes; with regard to the adjacent first compensation position range 2 and first compensation position range 3, the position difference value between the first compensation position range 2 and the first compensation position range 3 is 400 bytes, then the first compensation position range 1 with the minimum position difference value and the first compensation position range 2 are selected for merging, the first compensation position range 1 and the first compensation position range 2 that are obtained after merging processing include media data of the first byte to the 600th byte in the original media data. For example, after the first compensation position range 1 and the first compensation position range 2 that are merged are obtained, the first compensation position range 3 is the remaining first compensation position range in the multicast stream.

For example, if it is determined that the total number of the first compensation position ranges in the multicast stream is 2 according to the first compensation position range 3 and the first compensation position range 1 and the first compensation position range 2 that have undergone merging processing, the merging processing on the first compensation position range in the multicast stream may be stopped.

Exemplarily, the second compensation position range 1 is determined according to the first compensation position range 1 and the first compensation position range 2 after merging processing, and the second compensation position range 2 is determined according to the first compensation position range 3. Certainly, the present disclosure is not limited thereto, and no limitation is made herein, thereby acquiring a plurality of second compensation position ranges in the multicast stream.

In some examples, the merging processing comprises: taking a starting position of a first compensation position range with a smaller starting position in first compensation position ranges adjacent to two positions as a starting position of the merged first compensation position range; in the two adjacent first compensation position ranges, the end position of the first compensation position range with the larger starting position is used as the end position of the merged first compensation position range.

By way of example, for a first range of compensation positions 1 and a first range of compensation positions 2, a first compensation position range with a relatively small starting position is a first compensation position range 1, that is, the media data of the first byte in the original media data is used as the start positions of the first compensation position range 1 and the first compensation position range 2 after the merging processing; a first compensation position range with a larger starting position is a first compensation position range 2, and an end position of the first compensation position range 2 is set, that is, the media data of the 600th byte in the original media data serves as end positions of the first compensation position range 1 and the first compensation position range 2 after the merging processing, in this way, the first compensation position range 1 and the first compensation position range 2 that are obtained after merging processing include the media data of the first byte to the 600th byte in the original media data.

Exemplarily, when the total number of the first compensation position ranges is greater than the threshold of the number of times of unicast compensation, the first compensation position range is merged to obtain the second compensation position range, which helps to improve the convenience of controlling the number of times of video multicast data compensation, and improves the efficiency of video multicast data compensation by reducing the number of times of unicast compensation. Moreover, by sequentially selecting a first compensation position range adjacent to two positions of the position difference value for merging processing, the amount of additionally increased unicast compensation data is reduced while reducing the number of unicast compensation times as much as possible, thereby being beneficial to improving the efficiency of video multicast data compensation and improving video multicast quality.

In step S106, unicast compensation is performed on the multicast stream according to a plurality of second compensation position ranges.

Exemplarily, the performing unicast compensation on the multicast stream, for example, includes: acquiring, according to a plurality of second compensation position ranges, compensation data required for the unicast compensation from the server end, and filling the compensation data in the corresponding second compensation position ranges to obtain the multicast stream after the unicast compensation.

Step S107: send the multicast stream after the unicast compensation to the player end.

Exemplarily, after receiving the multicast stream after the unicast compensation, the player end may perform video multicast. It can be understood that unicast compensation is performed on a multicast stream, which helps improve video multicast quality.

In some examples, when a server end receives a video multicast request, a multicast stream generated by processing original media data based on the video multicast request includes, for example, a media data packet and a redundant data packet.

For example, generating a multicast stream according to a preset media data processing rule comprises: performing packet-splitting processing on original media data to obtain media data packets and redundant data packets; obtain a multicast stream according to the media data packets and the redundant data packets.

Exemplarily, performing packet segmentation processing on original media data to obtain a media data packet and a redundant data packet, for example, comprises: dividing, according to a preset position range threshold, the original media data to obtain a media data packet; grouping the media data packets according to a pre-set threshold value of the number of media data packets to obtain media data packet groups; perform FEC encoding on the media data packet to obtain redundant data packets.

In some examples, the resulting media data packets comprise, for example, media data packets 1 to 6, the preset threshold of the number of media data packets is, for example, 2, and one media data packet group is determined in turn according to each of the two media data packets, FEC encoding is performed on the media data packet to obtain a redundant data packet, for example, FEC encoding is performed on the media data packet 1 and the media data packet 2 to obtain a redundant data packet 1; perform FEC coding for the media data packet 3 and the media data packet 4 to obtain a redundant data packet 2; perform FEC coding on the media data packet 5 and the media data packet 6 to obtain a redundant data packet 3; of course, the present disclosure is not limited thereto. Exemplarily, the redundant data packet 1 may be used to recover the media data packet 1 and the media data packet 2; the redundant data packet 2 may be used to recover the media data packet 3 and the media data packet 4, and so on.

In an example, identifier information may be added to redundant data packets in a multicast stream.

For example, the identification information of the redundant data packets includes, for example, a sequence number of the redundant data packet, a redundant data packet type identifier, and a range of a preset sequence number of a restored media data packet corresponding to the redundant data packet. For example, if the sequence number of the redundant data packet 1 is 1, the redundant data packet type identifier is used to indicate that the redundant data packet 1 is a redundant data packet, so as to distinguish the redundant data packet 1 from the media data packet, and the preset range of the sequence number for recovering the media data packet corresponding to the redundant data packet 1 is, for example, from the media data packet 1 to the media data packet 2, and so on.

In some examples, the generated multicast stream is sent to the multicast proxy by sending each media data packet and redundant data packet in the multicast stream to the multicast proxy.

Exemplarily, a media data packet and a redundant data packet in a multicast stream may be grouped to obtain a multicast data packet, each multicast data packet in the multicast stream is sent to a multicast proxy, and the generated multicast stream is sent to the multicast proxy. For example, the media data packets in the multicast stream include media data packet 1 to media data packet 6, the redundant data packets in the multicast stream include redundant data packet 1 to redundant data packet 3, and the multicast data packet 1 includes media data packet 1 to media data packet 4 and redundant data packet 1 to redundant data packet 2; the multicast data packets 2 include, for example, media data 5 to media data packets 6 and redundant data packets 3; of course, the present disclosure is not limited thereto.

In an example, after acquiring the multicast stream from the server end, the video multicast method further comprises: determining a packet loss situation of the multicast stream based on a preset packet loss determination rule; performing FEC compensation on the multicast stream according to the packet loss situation of the multicast stream.

In an example, when the multicast stream is obtained from the server end, the media data packets and redundant data packets included in the multicast stream are obtained, for example, in the form of multicast data packets. For example, each multicast data packet includes a media data packet and a redundant data packet whose preset sequence number range of the recovered media data packet corresponds to the sequence number of the media data packet in the multicast data packet.

Exemplarily, when the media data packet and the redundant data packet included in the multicast stream are obtained in the form of the multicast data packet, for example, the packet loss situation in the multicast data packet may be judged every time one multicast data packet is acquired, and according to a packet loss situation of the multicast data packets, performing FEC compensation on the multicast data packets, so as to judge the packet loss situation of each multicast data packet and according to the packet loss situation of each multicast data packet, respectively performing FEC compensation on each multicast data packet, so as to complete FEC compensation on a multicast stream.

In an example, determining a packet loss situation of a multicast stream based on a preset packet loss judgment rule comprises: acquiring a sequence number of each media data packet in the multicast stream; in the case where the sequence numbers of the media data packets are discontinuous, determining that loss of a media data packet exists in a multicast stream; determine the sequence number of the lost media data packets and the number of the lost media data packets according to the sequence number of the media data packets.

For example, a sequence number of each media data packet in a multicast stream, for example, includes 1 to 5,7 to 10, and then the sequence number 5 is discontinuous from the sequence number 7; it is determined that a lost media data packet exists in the multicast stream; and according to the discontinuity between the sequence number 5 and the sequence number 7, it is determined that a sequence number 6 of the lost media data packet, and it is determined that the number of lost media data packets is 1.

Exemplarily, a packet loss situation of a multicast stream is determined based on a preset packet loss judgment rule, comprising: acquiring a sequence number of each media data packet and a sequence number of each redundant data packet in the multicast stream; determining a range of sequence numbers of preset recovery media data packets corresponding to the redundant data packets according to sequence numbers corresponding to the redundant data packets; in the case where a sequence number different from the sequence number of each media data packet exists in the range of the preset recovered media data packet corresponding to the redundant data packet, determining that loss of the media data packet exists in the multicast stream; determining the sequence number of the lost media data packets and the number of the lost media data packets according to the preset range of the sequence number of the recovered media data packets and the sequence number of each media data packet corresponding to each redundant data packet.

For example, a sequence number of each media data packet in the multicast stream includes, for example, a sequence number 3 and a sequence number 6, and a range of sequence numbers of preset media data packets restored to correspond to redundant data packets includes, for example, a sequence number 1 to a sequence number 3, if there are a sequence number 1, a sequence number 2, a sequence number 4 and a sequence number 5 which are different from the sequence number of the media data packet in the range of the sequence number of the media data packet restored according to the preset corresponding to the redundant data packet, then it can be determined that a lost media data packet exists in the multicast stream, and it is determined that the sequence numbers of the lost media data packets are sequence number 1, sequence number 2, sequence number 4 and sequence number 5, determine that the number of lost media data packets is 4.

Exemplarily, whether the media data packet loss exists in the multicast stream is judged by selecting or combining different manners, and determining sequence numbers of lost media data packets and determining the number of lost media data packets, this improves the flexibility and overall extent of determining the packet loss situation of the multicast stream, and improves the overall extent of performing FEC compensation on the multicast stream, thus, the overall degree of compensating the multicast stream is improved, and the video multicast quality is improved.

In an example, performing FEC compensation on a multicast stream according to a packet loss situation of the multicast stream comprises: determining whether the number of lost media data packets is less than or equal to the number of redundant data packets in the multicast stream; and when determining that the number of lost media data packets is less than or equal to the number of redundant data packets, selecting the lost media data packets whose sequence numbers are within the range of the sequence number of the preset recovered media data packet corresponding to the redundant data packets to perform the FEC compensation.

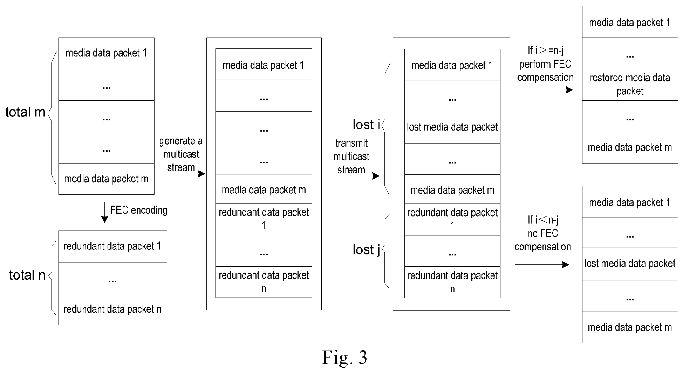

For example, as shown in figure 3, the number of media data packets in the multicast stream is m, for example, one, and the number of redundant data packets is *n,* for example, one, wherein, m, nboth are positive integers, after the multicast stream is acquired from the server end, for example, after the multicast stream is transmitted from the server end to the multicast proxy, the number of lost media data packets in the multicast stream is *i*, and the number of lost redundant data packets is *i,* therefore, the number of received redundant data packets is (*n* - *j*)*,* where *i, j* is a positive integer. If *i* ≤ (*n - j*), selecting the lost media data packets whose sequence numbers are within the sequence number range of the preset recovered media data packets corresponding to the redundant data packets to perform the FEC compensation; if *i* > (*n - j*), the FEC compensation cannot be performed on the multicast stream.

In an implementation, the multicast stream after the FEC compensation may be sent to the client.

Exemplarily, after receiving the multicast stream after the FEC compensation, the player end may perform video multicast. It can be understood that FEC compensation is performed on a multicast stream, which helps improve video multicast quality.

In an embodiment, after the multicast stream is obtained from the server end, unicast compensation may be separately performed on the multicast stream, or FEC compensation may be separately performed on the multicast stream; definitely, the present disclosure is not limited thereto, for example, unicast compensation and FEC compensation may also be performed on the multicast stream.

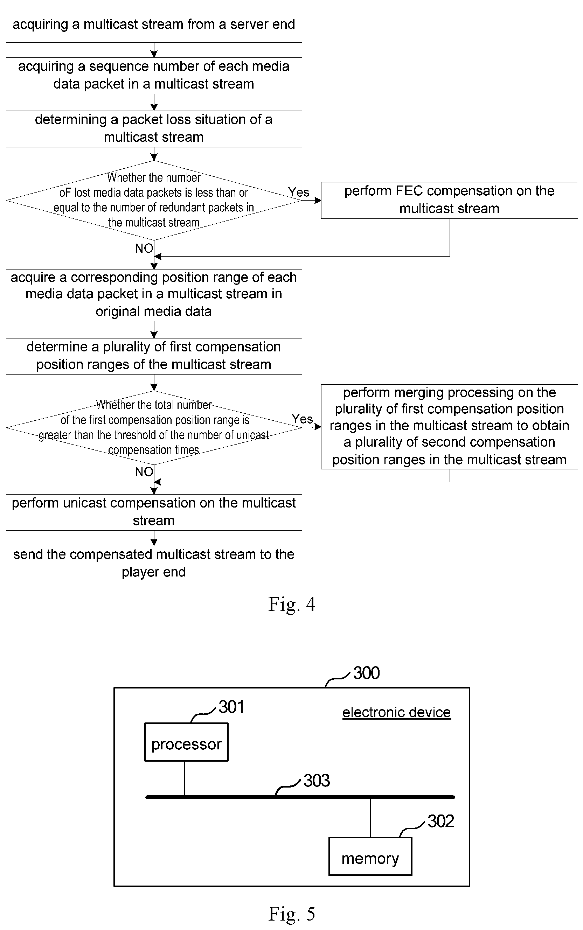

In one embodiment, as shown in figure 4, for example, after the multicast stream is obtained from the server end, the packet loss situation of the multicast stream is determined based on a preset packet loss judgment rule; performing FEC compensation on the multicast stream according to a packet loss situation of the multicast stream; after performing FEC compensation on the multicast stream, acquiring a corresponding position range of each media data packet in the multicast stream in original media data; determining a plurality of first compensation position ranges of a multicast stream according to a corresponding position range of each media data packet in original media data; determining a total number of a plurality of first compensation position ranges in a multicast stream; in the case where the total number of the plurality of first compensation position ranges in the multicast stream is greater than a threshold value of unicast compensation times , according to a pre-set merging rule, merging the plurality of first compensation position ranges in the multicast stream to obtain a plurality of second compensation position ranges in the multicast stream; performing unicast compensation on the multicast stream according to a plurality of second compensation position ranges; the multicast stream after the unicast compensation is sent to the player end.

For example, when the multicast stream is compensated, the unicast compensation and the FEC compensation are combined, so that the unicast compensation can be performed on the multicast stream after the FEC compensation or the multicast stream for which the FEC compensation cannot be performed, which is beneficial to improving the compensation mechanism for the video multicast data, improving the flexibility and overall degree of the compensation on the video multicast data, thereby improving the video multicast quality.

In an embodiment, FEC compensation may be performed on a multicast stream to reduce unicast compensation data volume corresponding to unicast compensation performed on the multicast stream, thereby improving video multicast data compensation efficiency and improving video multicast quality.

According to the video multicast method provided in the foregoing example, a multicast stream is acquired from a server end; acquiring a corresponding position range of each media data packet in the multicast stream in original media data; determining a plurality of first compensation position ranges of the multicast stream according to corresponding position ranges of the media data packets in original media data; determining a total number of the first compensation position ranges in the multicast stream; in the case where the total number of the plurality of first compensation position ranges in the multicast stream is greater than a threshold value of unicast compensation times, according to a pre-set merging rule, merging the plurality of first compensation position ranges in the multicast stream to obtain a plurality of second compensation position ranges in the multicast stream; performing unicast compensation on the multicast stream according to a plurality of second compensation position ranges; the multicast stream after the unicast compensation is sent to the player end. According to the present disclosure, a plurality of first compensation position ranges in a multicast stream can be merged, thereby improving the convenience degree of controlling the number of times of compensating video multicast data, improving the efficiency of compensating the video multicast data, and thus improving the video multicast quality.

Please refer to figure 5, figure 5 is a schematic structural block diagram of an electronic device according to an embodiment of the present disclosure.

As shown in figure 5, the electronic device 300 includes a processor 301 and a memory 302, where the processor 301 and the memory 302 are connected by using a bus 303, and the bus is, for example, an I2C (Inter-integrated Circuit) bus.

Specifically, the processor 301 is configured to provide computing and control capabilities and support running of the whole electronic device. The processor 301 may be a Central Processing Unit (CPU), and may also be another general processor, a Digital Signal Processor (DSP), an Application Specific Integrated Circuit (ASIC), a Field-Programmable Gate Array (FPGA), or another programmable logic device, a discrete gate or transistor logic device, a discrete hardware component, or the like. The general processor may be a microprocessor, or the processor may also be any conventional processor.

Specifically, the memory 302 may be a Flash chip, a Read-Only Memory (ROM) disk, an optical disk, a U disk, a removable hard disk, or the like.

A person skilled in the art may understand that the structure shown in figure 5 is only a partial block structure related to the solutions of the embodiments of the present disclosure, and does not limit the electronic devices to which the solutions of the embodiments of the present disclosure are applied. A specific server end may include more or fewer components than those shown in the figures, or combine some components, or have different component arrangements.

The processor is configured to run a computer program stored in the memory, and implement, when executing the computer program, any one of the video multicast methods provided in the embodiments of the present disclosure.

In an example, the processor is configured to run a computer program stored in the memory, and implement the following steps when executing the computer program:
Acquiring a multicast stream from a server end;
Acquiring a corresponding position range of each media data packet in the multicast stream in original media data;
Determining a plurality of first compensation position ranges of the multicast stream according to corresponding position ranges of the media data packets in original media data;
Determining a total number of the first compensation position ranges in the multicast stream;
In the case where the total number of the plurality of first compensation position ranges in the multicast stream is greater than a threshold value of unicast compensation times , according to a pre-set merging rule, merging the plurality of first compensation position ranges in the multicast stream to obtain a plurality of second compensation position ranges in the multicast stream;
Performing unicast compensation on the multicast stream according to a plurality of second compensation position ranges;
The multicast stream after the unicast compensation is sent to the player end.

In an example, when the processor implements the determination of the plurality of first compensation position ranges of the multicast stream according to the corresponding position ranges of the media data packets in the original media data, the processor is configured to:
Acquiring a position difference value between two adjacent media data packets according to a corresponding position range of each of the media data packets in original media data;
Judging whether a position difference between two adjacent media data packets is greater than a pre-set difference threshold;
In the case where a position difference value between two adjacent media data packets is greater than a pre-set difference threshold, determining a plurality of first compensation position ranges of the multicast stream according to all the position difference values.

In an example, when the processor implements the merging processing on the plurality of first compensation position ranges in the multicast stream according to the preset merging rule to obtain a plurality of second compensation position ranges in the multicast stream, the processor is configured to:
Acquiring a position difference between each two adjacent first compensation position ranges;
Sequentially selecting two adjacent first compensation position ranges with a minimum position difference value for merging processing to obtain the merged first compensation position range;
Stopping performing merging processing on the first compensation position range in the multicast stream in a case that the total number of the remaining first compensation position ranges in the multicast stream and the number of the first compensation position ranges after the merging processing is smaller than or equal to the threshold value of the unicast compensation times;
And acquiring a plurality of second compensation position ranges in the multicast stream according to the remaining first compensation position range and the merged first compensation position range.

In an example, when the processor implements the merging processing, the processor is configured to:
Using a starting position of the first compensation position range with a smaller starting position in the two adjacent first compensation position ranges as a starting position of the merged first compensation position range;
Using an ending position of the first compensation position range with a larger starting position in the two adjacent first compensation position ranges as an ending position of the merged first compensation position range.

In an example, after the processor realizes the acquisition of the multicast stream from the server end, the processor is configured to:
Determining packet loss situation of the multicast stream based on a pre-set packet loss judgment rule;
Performing FEC compensation on the multicast stream according to the packet loss situation of the multicast stream.

In an example, when the processor implements the determining the packet loss situation of the multicast stream based on the preset packet loss determining rule, the processor is configured to:
Acquiring a sequence number of each media data packet in the multicast stream;
In the case where the sequence numbers of the media data packets are discontinuous, determining that loss of the media data packets exists in the multicast stream;
Determining the sequence number of the lost media data packets and the number of the lost media data packets according to the sequence number of the media data packets.

In some examples, when the processor implements the determining the packet loss situation of the multicast stream based on the preset packet loss determining rule, the processor is configured to:
Acquiring a sequence number of each media data packet and a sequence number of each redundant data packet in the multicast stream;
Determining a range of sequence numbers of preset recovery media data packets corresponding to the redundant data packets according to sequence numbers corresponding to the redundant data packets;
In a case that a sequence number different from the sequence number of each of the media data packets exists in a range of sequence numbers of preset recovery media data packets corresponding to the redundant data packets, determining that media data packet loss situation exists in the multicast stream;
Determining the sequence number of the lost media data packet and the number of the lost media data packets according to the range of the sequence number of the preset media data packet recovered and the sequence number of each media data packet corresponding to each redundant data packet.

In an example, when the processor implements FEC compensation on the multicast stream according to the packet loss situation of the multicast stream, the processor is configured to:
Determining whether the number of lost media data packets is less than or equal to the number of redundant data packets in the multicast stream;
And when determining that the number of lost media data packets is less than or equal to the number of redundant data packets, selecting lost media data packets whose sequence numbers are within a range of sequence numbers of preset recovery media data packets corresponding to the redundant data packets for FEC compensation.

It should be noted that, a person skilled in the art may clearly understand that, for the purpose of convenient and brief description, for a detailed working process of the foregoing electronic device, reference may be made to a corresponding process in the foregoing video multicast method embodiment, and details are not described herein again.

Embodiments of the present disclosure further provide a storage medium, which is used for computer readable storage. The storage medium stores one or more programs. The one or more programs may be executed by one or more processors, so as to implement steps of any video multicast method provided in the description of the embodiments of the present disclosure.

The storage medium may be an internal storage unit of the electronic device described in the foregoing embodiments, for example, a hard disk or a memory of the electronic device. The storage medium may also be an external storage device of the electronic device, for example, a plug-in hard disk, a Smart Media Card (SMC), a Secure Digital (SD) card, and a flash memory card (Flash Card) that are equipped on the electronic device.

Those of ordinary skill in the art can appreciate that the functional blocks/units in all or some of the steps, systems, and apparatuses of the methods disclosed above can be implemented as software, firmware, hardware, and any suitable combination thereof. In hardware embodiments, the division between functional modules/units referred to in the above description does not necessarily correspond to the division of physical components; For example, one physical component may have multiple functions, or one function or step may be cooperatively performed by several physical components. Some or all of the physical components may be implemented as software executed by a processor, such as a central processor, digital signal processor, or microprocessor, or as hardware, or as an integrated circuit, such as an application specific integrated circuit. Such software may be distributed on computer-readable media, which may include computer storage media (or non-transitory media) and communication media (or transitory media). As is well known to those of ordinary skill in the art, the term computer storage media includes both volatile and nonvolatile, removable and non-removable media implemented in any method or technology for storage of information (such as computer readable instructions, data structures, program modules, or other data). Computer storage media includes, but is not limited to, RAM, ROM, EEPROM, flash memory or other memory technology, CD-ROM, digital versatile discs (DVD) or other optical disk storage, magnetic cassettes, magnetic tape, magnetic disk storage or other magnetic storage devices, or any other medium which can be used to store the desired information and which can be accessed by a computer. In addition, communication media typically embodies computer readable instructions, data structures, program modules, or other data in a modulated data signal such as a carrier wave or other transport mechanism and may include any information delivery media as is known to those of ordinary skill in the art.

It should be understood that the term "and/or" as used in this description and the appended claims refers to, and includes, any and all possible combinations of one or more of the items listed in association. It should be noted that, in this specification, the terms "include", "comprise", or any other variation thereof are intended to cover a non-exclusive inclusion, so that a process, a method, an article, or a system that includes a series of elements not only includes those elements, but also includes other elements that are not explicitly listed, or further includes inherent elements of the process, the method, the article, or the system. An element limited by "including a... " does not exclude that there are other same elements in the process, method, article, or system that includes the element, unless there are more limitations.

The serial numbers of the embodiments of the present disclosure are only for description, and do not represent the preference of the embodiments. The foregoing descriptions are merely specific embodiments of the present disclosure, but are not intended to limit the scope of protection of the present disclosure. Any equivalent modification or replacement readily figured out by a person skilled in the art within the technical scope disclosed in the present disclosure shall fall within the scope of protection of the present disclosure. Therefore, the scope of protection of the present disclosure shall be subject to the scope of protection of the claims.

## Claims

1. A video multicast method, comprising:
acquiring a multicast stream from a server end;
acquiring a corresponding position range of each media data packet in the multicast stream in original media data;
determining a plurality of first compensation position ranges of the multicast stream according to the corresponding position range of each media data packet in the original media data;
determining a total number of the plurality of first compensation position ranges in the multicast stream;
in a case where the total number of the plurality of first compensation position ranges in the multicast stream is greater than a threshold value of unicast compensation times, merging the plurality of first compensation position ranges in the multicast stream according to a pre-set merging rule to obtain a plurality of second compensation position ranges in the multicast stream;
performing unicast compensation on the multicast stream according to the plurality of second compensation position ranges;
sending the multicast stream after the unicast compensation to a player end.

2. The video multicast method according to claim 1, wherein determining the plurality of first compensation position ranges of the multicast stream according to the corresponding position range of each media data packet in the original media data comprises:
acquiring a position difference value between two adjacent media data packets according to the corresponding position range of each media data packet in the original media data;
judging whether the position difference value between the two adjacent media data packets is greater than a pre-set difference threshold;
in a case where a position difference value between the two adjacent media data packets is greater than the pre-set difference threshold, determining the plurality of first compensation position ranges of the multicast stream according to all the position difference values.

3. The video multicast method according to claim 1, wherein merging the plurality of first compensation position ranges in the multicast stream according to the pre-set merging rule to obtain the plurality of second compensation position ranges in the multicast stream comprises:
acquiring a position difference value between each two adjacent first compensation position ranges;
sequentially selecting two adjacent first compensation position ranges with a minimum position difference value for merging processing to obtain the merged first compensation position range;
in a case where a sum of the number of the remaining first compensation position ranges in the multicast stream and the number of the first compensation position ranges after the merging processing is smaller than or equal to the threshold value of the unicast compensation times, stopping performing the merging processing on the first compensation position range in the multicast stream; and
acquiring the plurality of second compensation position ranges in the multicast stream according to the remaining first compensation position ranges and the merged first compensation position range.

4. The video multicast method according to claim 3, wherein the merging processing comprises:
using a starting position of the first compensation position range with a smaller starting position in the two adjacent first compensation position ranges as a starting position of the merged first compensation position range.
using an ending position of the first compensation position range with a larger starting position in the two adjacent first compensation position ranges as an ending position of the merged first compensation position range.

5. The video multicast method according to any one of claims 1 to 4, wherein after acquiring the multicast stream from the server end, the method further comprises:
determining a packet loss situation of the multicast stream based on a pre-set packet loss judgment rule;
performing FEC compensation on the multicast stream according to the packet loss situation of the multicast stream.

6. The video multicast method according to claim 5, wherein determining the packet loss situation of the multicast stream based on the preset packet loss judgment rule comprises:
acquiring a sequence number of each media data packet in the multicast stream;
in a case where the sequence numbers of the media data packets are discontinuous, determining that loss of the media data packets exists in the multicast stream;
determining the sequence numbers of the lost media data packets and the number of the lost media data packets according to the sequence numbers of the media data packets.

7. The video multicast method according to claim 5, wherein determining the packet loss situation of the multicast stream based on the preset packet loss judgment rule comprises:
acquiring a sequence number of each media data packet and a sequence number of each redundant data packet in the multicast stream;
determining a range of sequence numbers of preset recovery media data packets corresponding to the redundant data packets according to the sequence numbers of the redundant data packets;
in a case where a sequence number different from the sequence number of each media data packet exists in the range of sequence numbers of preset recovery media data packets corresponding to the redundant data packets, determining that media data packet loss situation exists in the multicast stream;
determining the sequence number of the lost media data packet and the number of the lost media data packets according to the range of the sequence numbers of the preset recovery media data packets and the sequence number of each media data packet corresponding to each redundant data packet.

8. The video multicast method according to claim 6 or 7, wherein performing FEC compensation on the multicast stream according to the packet loss situation of the multicast stream comprises:
determining whether the number of lost media data packets is less than or equal to the number of redundant data packets in the multicast stream; and
in a case where the number of lost media data packets is less than or equal to the number of redundant data packets, selecting lost media data packets which sequence numbers are within a range of sequence numbers of preset recovery media data packets corresponding to the redundant data packets for FEC compensation.

9. An electronic device, wherein the electronic device comprises a processor, a memory, a computer program stored on the memory and executable by the processor, and a data bus for connecting communication between the processor and the memory, the computer program is configured to, when executed by the processor, implement the steps of the video multicast method according to any one of claims 1 to 8.

10. A storage medium, used for computer readable storage, wherein the storage medium stores one or more programs, and the one or more programs are configured to, when executed by one or more processors, implement the steps of the video multicast method as claimed in any one of claims 1 to 8.
